# EUROPEAN PATENT APPLICATION

(11) **EP 3 789 738 A1**
(43) Date of publication of application: **10.03.2021**
(21) Application number: 19195687.9
(22) Date of filing: 05.09.2019
(51) Int. Cl.: G01D 7/02

(54) **SPEEDOMETER DISPLAY**

(71) Applicant: Ningbo Geely Automobile Research & Development Co. Ltd., Hangzhou Bay New District Ningbo 315336 (CN)
(72) Inventor: LINDBERG NILSSON, Erik, 417 47 GÖTEBORG (SE); ANDERSSON, Håkan, 418 33 GÖTEBORG (SE)
(74) Representative: Zacco Sweden AB

(57) **Abstract**

A speedometer for a vehicle comprises a display (1) arranged to display a speed scale (2). The display (1) is further arranged to display a speed limit (3) and the current travelling speed (4). The speedometer is arranged to adapt the displayed speed scale (2) according to the speed limit (3) such that the speed limit (3) is arranged to be displayed in the same location on the display (1) irrespective of the speed limit.

## Description

### TECHNICAL FIELD

The present invention relates to a speedometer for a vehicle comprising a display arranged to display a speed scale, wherein the display is further arranged to display a speed limit and the current travelling speed. Also, it relates to a method for displaying in a vehicle the current traveling speed and the speed limit on a speedometer display.

### BACKGROUND

Speedometer displays show the traveling speed of the vehicle in which it is installed. The measurement of the speed can be made in various ways. One way is to use a rotating flexible cable driven by gearing linked to the output of the vehicle's transmission or driven from a front wheel. When the vehicle is in motion, a speedometer gear assembly turns a speedometer cable, which then turns the speedometer mechanism itself. A small permanent magnet affixed to the speedometer cable interacts with a small aluminum cup (called a speed cup) attached to the shaft of the pointer on the analogue speedometer instrument. As the magnet rotates near the cup, the changing magnetic field produces eddy currents in the cup, which themselves produce another magnetic field. The effect is that the magnet exerts a torque on the cup, "dragging" it, and thus the speedometer pointer, in the direction of its rotation with no mechanical connection between them.

Many modern speedometers are electronic. In designs derived from earlier eddy-current models, a rotation sensor mounted in the transmission delivers a series of electronic pulses whose frequency corresponds to the (average) rotational speed of the driveshaft, and therefore the vehicle's speed, assuming the wheels have full traction. The sensor is typically a set of one or more magnets mounted on the output shaft or (in transaxles) differential crown wheel, or a toothed metal disk positioned between a magnet and a magnetic field sensor. As the part in question turns, the magnets or teeth pass beneath the sensor, each time producing a pulse in the sensor as they affect the strength of the magnetic field it is measuring. Alternatively, particularly in vehicles with multiplex wiring, some manufacturers use the pulses coming from the ABS wheel sensors which communicate to the instrument panel via the CAN Bus. Most modern electronic speedometers have the additional ability over the eddy current type to show the vehicle speed when moving in reverse gear.

Since about 2008, speed limit detection has been available in vehicles using traffic-sign recognition. An alternative is to use data stored with the GPS-system in order to display the speed limits. Several new car models come with speed limit information systems fitted as standard, but more needs to be done in order to prevent a driver from speeding or sometimes even to prevent a driver to drive too slow and thus creating a decrease in the flow on a street during rush hour.

### SUMMARY

It is therefore an object of the present invention to provide a speedometer display for a vehicle that displays the current traveling speed of the vehicle and the speed limit in a way such that a driver can adjust the speed more easily to the speed limit.

According to a first aspect of the present disclosure a speedometer for a vehicle comprises a display arranged to display a speed scale, a speed limit, and the current travelling speed. The speedometer is further arranged to adapt the displayed speed scale according to the speed limit such that the speed limit is arranged to be displayed in the same location on the display irrespective of the speed limit.

An advantage is that the driver more easily sees the current speed limit in relation to the current traveling speed. Since the current speed limit is always displayed in the same location on the display, the driver can more intuitively understand what the current traveling speed is in relation to the speed limit.

According to a further aspect of the present disclosure the speed limit is arranged to be displayed in the middle of the displayed speed scale. Generally, it is easier to focus on an item in the middle of a screen than in the periphery.

The speedometer is according to one aspect of the present disclosure arranged to select a subset of an available total speed scale around the speed limit and display the selected speed scale subset. A standard speedometer display shows a fixed scale starting with 0 up to at least 100+, most modern cars have scales from 0 up to 200+. With a selected subset of the speed scale it could for instance show the speed limit +/- 30 km/h, thus further increasing the visibility.

According to another aspect of the present disclosure the speedometer comprises an indication means for indicating the speed limit on the displayed speed scale. The alternative is showing the current traveling speed with for instance digits or possibly having an indication adjacent the scale.

According to an alternative aspect of the present disclosure the speedometer comprises a pointer moveably arranged relative the speed scale for indicating the current travelling speed. The pointer, also called pointer needle, is the most common indication means used .

The area on the display displaying the difference between the speed limit and the current traveling speed is highlighted according to a preferred aspect of the present disclosure. Thus, the larger the area that is highlighted, the larger the difference between the speed limit and the current traveling speed. This highlighting could be varied as well, for instance, if the difference is above 30 km/h, the signal could start flashing and with increased frequency with increased difference.

According to yet another aspect of the present disclosure the highlighted field is highlighted in a first way when the current traveling speed is above the speed limit and in a second way different from the first way when the current traveling speed is below the speed limit. For instance, if the current traveling speed is above the speed limit, the area displaying the difference could be made to show a red color and if the current traveling speed instead is below the speed limit the area displaying the difference could be made to show a green color.

The speed scale is enlarged adjacent the speed limit according to a further aspect of the present disclosure. This increases the visibility of the difference between the speed limit and the current traveling speed. Thus, the distance between the digits shown on the scale is larger close to the speed limit digits.

According to an aspect of the present disclosure a method for displaying in a vehicle the current traveling speed and the speed limit on a speedometer display comprises receiving information on the current traveling speed, receiving information on the speed limit, displaying a speed scale, moving the speed scale to have the speed limit in a fixed position on the speedometer display, and displaying the current traveling speed.

According to a further aspect of the present disclosure the method comprises the step of highlighting the area between the current traveling speed and the speed limit.

According to yet a further aspect of the present disclosure the speed limit information is received from a navigation system.

According to another aspect of the present disclosure speed limit information is received from a camera in the vehicle that is arranged to identify speed limit signs by a road.

In accordance with an aspect of the present disclosure the method comprises the step of enlarging the speed scale adjacent the speed limit.

In accordance with a further aspect of the present disclosure the method comprises the step of emitting a tactile signal to the driver if the current traveling speed is above the speed limit.

Further features of, and advantages with, the present invention will become apparent when studying the appended claims and the following description. The skilled person realize that different features of the present invention may be combined to create embodiments other than those described in the following, without departing from the scope of the present invention.

### BRIEF DESCRIPTION OF THE DRAWINGS

The above, as well as additional objects, features and advantages of the present invention, will be better understood through the following illustrative and non-limiting detailed description of exemplary embodiments of the present invention, wherein:
Figs. 1a and 1b schematically show the principle of the speedometer display according to the present disclosure,
Fig. 2 schematically shows an embodiment of a speedometer display according to the present disclosure,
Fig. 3 schematically shows a further embodiment of a speedometer display according to the present disclosure,
Fig. 4 schematically shows an alternative embodiment of a speedometer display according to the present disclosure,
Fig. 5 schematically shows yet an alternative embodiment of a speedometer display according to the present disclosure,
Fig. 6 is a chart flow of the method according to the present disclosure.
Fig. 7 shows the changes on the speedometer display according to an embodiment when the speed limit decreases, and
Fig. 8 shows the changes on the speedometer display according to an embodiment when the speed limit increases.

### DETAILED DESCRIPTION OF EXAMPLE EMBODIMENTS OF THE INVENTION

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness. Like reference character refer to like elements throughout the description.

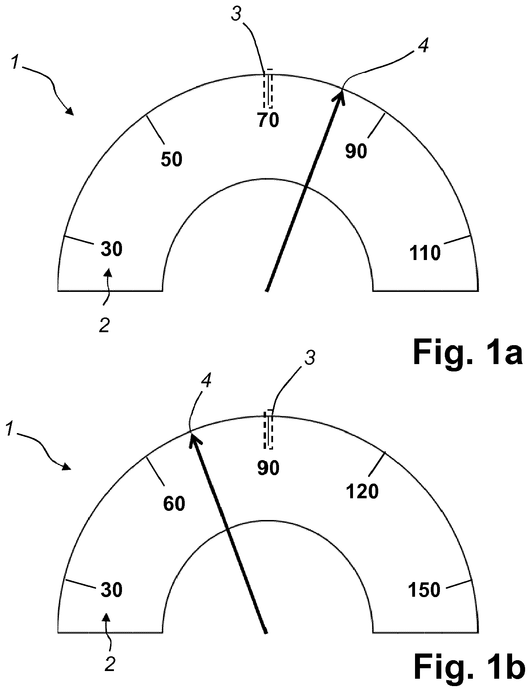

Figure 1a shows a speedometer display 1 displaying a speed scale 2. Also displayed is the speed limit 3 and the current travelling speed 4. The displayed speed scale 2 is arranged such that the speed limit 3 is arranged in the middle of the speed scale. In the shown example the speed limit 3 is 70 and the traveling speed 4 is about 80.

Turning to figure 1b, a speedometer display 1 displaying a speed scale 2 is shown, as well as the the speed limit 3 and the current travelling speed 4. The displayed speed scale 2 is arranged such that the speed limit 3 is arranged in the middle of the speed scale. In the shown example the speed limit 3 is 90 and the traveling speed 4 is about 75.

Further, in figures 1a and 1b, the displayed scale is varied such that the shown speed range at the lower speed limit (70) is smaller, see figure 1a, and at the higher speed limit (90) the shown speed range is larger, see figure 1b. Thus in the shown examples, when the speed limit is 70, figure 1a, the displayed speed range is 30 - 110, whereas when the speed limit is 90, figure 1b, the displayed range is 30 - 150.

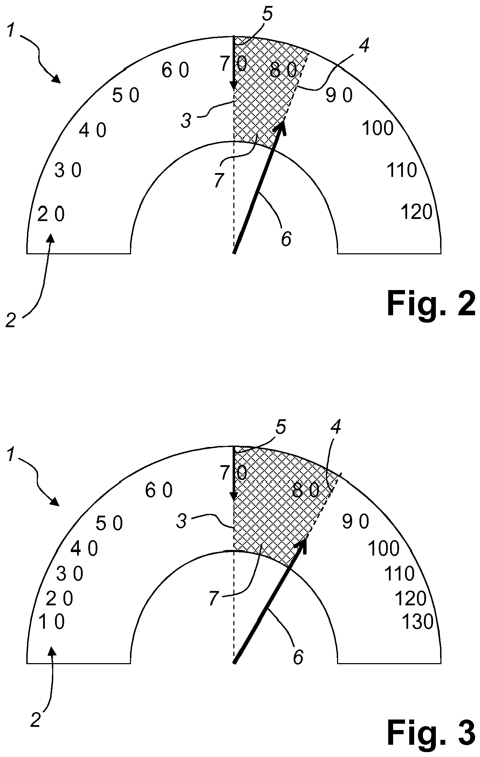

With reference to figure 2 an embodiment of a speedometer for a vehicle comprising a display 1 with a speed scale 2 is shown. The display 1 displays a speed limit 3 and a current travelling speed 4. The display 1 of the speedometer is arranged to adapt the displayed speed scale 2 according to the speed limit 3 such that the speed limit 3 is arranged to be displayed in the same location on the display 1 irrespective of the speed limit.

The display 1 is semicircular as is common in vehicles. The speed limit 3 is displayed in the middle of the displayed speed scale 2, i.e. at 12 o'clock. Further, the speedometer is arranged to select a subset of an available total speed scale 2 around the speed limit 3 and display the selected speed scale subset. In figure 2, the scale covers speeds starting at 20 and up to 120. Should for instance the speed limit be decreased to 50, the scale will move such that 50 is at 12 o'clock and the visible speed scale would then go from 0 to 100.

The speedometer comprises an indication means 5 for indicating the speed limit on the displayed speed scale 2. Further, the speedometer comprises a pointer 6 moveably arranged relative the speed scale 2 for indicating the current travelling speed. Optionally, the pointer 6 could be a mechanical pointer for a more classic look.

Also shown is the area 7 on the display 1 displaying the difference between the speed limit 3 and the current traveling speed 4 highlighted. Thus, the difference between the speed limit 3 and the current traveling speed 4 is emphasized in a clear way.

Turning now to figure 3, an embodiment of a speedometer for a vehicle comprising a display 1 with a speed scale 2 is shown. The display 1 displays a speed limit 3 and a current travelling speed 4. The display 1 of the speedometer is arranged to adapt the displayed speed scale 2 according to the speed limit 3 such that the speed limit 3 is arranged to be displayed in the same location on the display 1 irrespective of the speed limit.

The speed limit 3 is displayed in the middle of the displayed speed scale 2. Further, the speedometer is arranged to select a subset of an available total speed scale 2 around the speed limit 3 and display the selected speed scale subset. In figure 3, the scale covers speeds starting at 10 and up to 130. Should for instance the speed limit be increased to 90, the scale will move such that 90 is at 12 o'clock and the visible speed scale could then go from 30 to 150.

The speedometer comprises an indication means 5 for indicating the speed limit on the displayed speed scale 2. Further, the speedometer comprises a pointer 6 moveably arranged relative the speed scale 2 for indicating the current travelling speed. Optionally, the pointer 6 could be a mechanical pointer for a more classic look.

Also shown is the area 7 on the display 1 displaying the difference between the speed limit 3 and the current traveling speed 4 highlighted. Thus, the difference between the speed limit 3 and the current traveling speed 4 is emphasized in a clear way.

As can be seen in figure 3 the speed scale 2 is enlarged adjacent the speed limit 3, approximately from 50 to 90 in this example. The increase in distance between speed indications, i.e. the enlargement, on the speed scale close to the speed limit could be done in various ways, for instance, linearly, exponentially, or non-linear incremental steps. Compared to the embodiment shown in figure 2 it will be even more easy to see if the current traveling speed 4 is differing from the speed limit 3. As a result of the enlarged scale, the highlighted area 7 is bigger compared to the one shown in figure 2 with the same difference in speed.

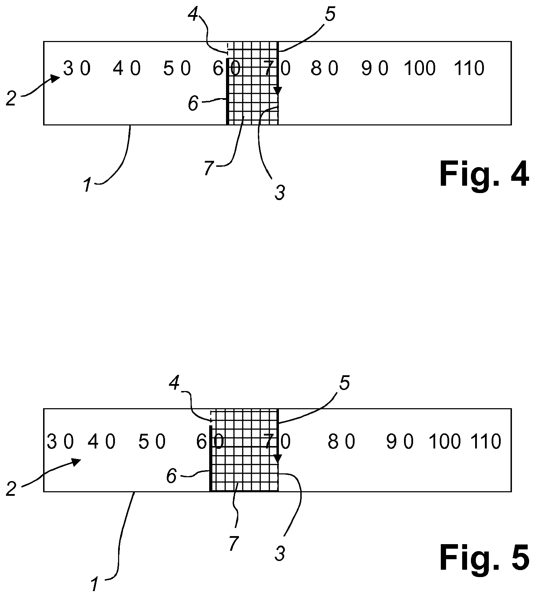

Figure 4 shows an alternative embodiment of the speedometer display 1 according to the present disclosure. A display 1 having a speed scale 2 and further displaying a speed limit 3 and the current travelling speed 4 is shown. The displayed speed scale 2 is arranged such that the speed limit 3 is arranged to be displayed in the same location on the display 1 irrespective of the speed limit.

The display 1 is rectangular and the speed limit 3 is arranged to be displayed in the middle of the displayed speed scale 2.

Further, the speedometer is arranged to select a subset of an available total speed scale 2 around the speed limit 3 (70) and display the selected speed scale subset.

The speedometer comprises an indication means 5 for indicating the speed limit on the displayed speed scale 2. For indicating the current traveling speed 4, the speedometer comprises a pointer 6 moveably arranged relative the speed scale 2 for indicating the current travelling speed.

As in the previously shown embodiments of figure 2 and 3, the area 7 on the display 1 displaying the difference between the speed limit 3 and the current traveling speed 4 is highlighted. The display 1 being rectangular, the highlighted area 7 is also rectangular.

In figure 5 an alternative embodiment of the speedometer display 1 according to the present disclosure is shown. A display 1 having a speed scale 2 and further displaying a speed limit 3 and the current travelling speed 4 is shown. The displayed speed scale 2 is arranged such that the speed limit 3 is arranged to be displayed in the same location on the display 1 irrespective of the speed limit.

The display 1 is rectangular and the speed limit 3 is arranged to be displayed in the middle of the displayed speed scale 2 and in the middle of the display 1.

Further, the speedometer is arranged to select a subset of an available total speed scale 2 around the speed limit 3 (70) and display the selected speed scale subset.

The speedometer comprises an indication means 5 for indicating the speed limit on the displayed speed scale 2. For indicating the current traveling speed 4, the speedometer comprises a pointer 6 moveably arranged relative the speed scale 2 for indicating the current travelling speed.

As in the previously shown embodiments of figure 2 and 3, the area 7 on the display 1 displaying the difference between the speed limit 3 and the current traveling speed 4 is highlighted. The display 1 being rectangular, the highlighted area 7 is also rectangular.

As can be seen in figure 5 the speed scale 2 is enlarged adjacent the speed limit 3 approximately from 50 to 90 in this example. The increase in distance between speed indications, i.e. the enlargement, on the speed scale close to the speed limit could be done in various ways, for instance, linearly, exponentially, or non-linear incremental steps. Compared to the embodiment shown in figure 4 it will be even more easy to see if the current traveling speed 4 is differing from the speed limit 3. As a result of the enlarged scale, the highlighted area 7 is bigger compared to the one shown in figure 4 with the same difference in speed.

The moving or changing of the speed scale 2 when the speed limit is changed could be made in various manners. Available systems today with camera detection changes the speed limit shown in a display instantly simultaneously with passing of the speed limit sign. With the speedometer of the present disclosure, one option is to have the speed limit displayed changed smoothly or linearly starting slightly before the speed limit sign if the speed limit is decreased. If on the other hand the speed limit instead is increased, the change of the displayed speed limit cannot start until the vehicle is passing the speed limit sign.

When the speed scale 2 moves in order to have the new speed limit 3 in the predetermined position, irrespective of whether it moves instantly or in another way, the pointer 6 will move as well simultaneously to show the current traveling speed 4.

For example, if the speed limit is changed from 70 km/h to 50 km/h, the scale could start moving when the vehicle has 100-200 m left to the speed limit sign or the navigation system sends the corresponding information to the speedometer. Upon reaching the speed limit sign the displayed speed limit should be 50 km/h. Alternatively, instead of a specific distance an estimated time of "arrival" could be used, for instance 5 to 10 seconds, thus calculated based on the current traveling speed. Correspondingly, when the speed limit is changed from 50 km/h to 70 km/h, i.e. increased, the displayed speed limit should start changing just at the speed limit sign and reach the new speed limit setting after 100-200 m or alternatively after a specific time.

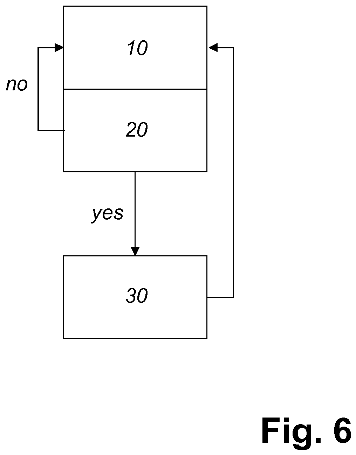

Figure 6 is a flow chart. The speed limit is monitored 10 or scanned continuously. Most OEMs provide the function in a car with a camera scanning the speed limit signs adjacent the roads. Some navigation systems have the speed limits for the roads stored or somehow retractable from the system, thus depending on the vehicle's position there is a specific speed limit 3 assigned for that position.

The set speed limit is compared 20 to the monitored/scanned speed limit. If *no* change is detected the monitoring and/or scanning continues. If there is a change, *yes*, the speedometer sets 30 the new speed limit and the speedometer continues to monitor/scan for changes.

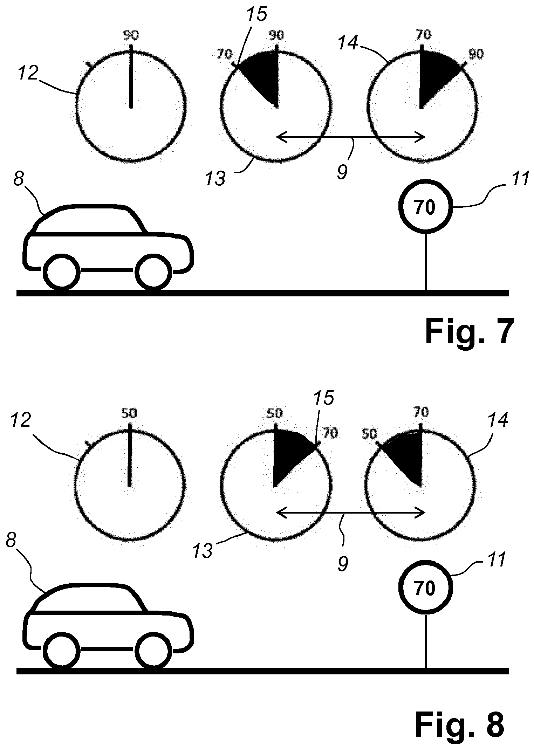

Figure 7 shows an example of a car 8 traveling at 90 km/h on a road with the speed limit 90 km/h approaching a road sign 11. From the road sign 11 and on the speed limit is 70 km/h. The left circle 12 symbolizes a speedometer display where both the traveling speed and speed limit is shown to be 90 km/h. At a predetermined distance 9 prior to the road sign, the upcoming speed limit 15 is shown in the display, see the middle circle 13. The area between the current speed limit and the upcoming speed limit 15 is indicated such that the driver easily can see if the upcoming new speed limit is above or below the current speed limit. The above mentioned predetermined distance 9 could be based on an actual distance/length or it could be based on an estimated time of arrival at the road sign 11. When the road sign 11 is reached, the right circle 14, and if the current traveling speed is not changed, the difference between the speed limit and the current traveling speed is highlighted. Preferably, the speed scale moves instantly upon reaching the road sign, showing the new speed limit, together with the indicator showing the current traveling speed. In the shown example where current traveling speed is not changed, the speed indicator moves clockwise together with the scale.

Figure 8 shows an example of a car 8 traveling at 50 km/h on a road with the speed limit 50 km/h approaching a road sign 11. From the road sign 11 and on the speed limit is 70 km/h. The left circle 12 symbolizes a speedometer display where both the traveling speed and speed limit is shown to be 50 km/h. At a predetermined distance 9 prior to the road sign 11, the upcoming speed limit 15 is shown in the display, see the middle circle 13. The area between the current speed limit and the upcoming speed limit is indicated such that the driver easily can see if the upcoming new speed limit is above or below the current speed limit. The above mentioned predetermined distance 9 could be based on an actual distance/length or it could be based on an estimated time of arrival at the road sign 11. When the road sign is reached, the right circle 14, and if the current traveling speed is not changed, the difference between the speed limit and the current traveling speed is highlighted. Preferably, the speed scale moves instantly upon reaching the road sign 11, showing the new speed limit, together with the indicator showing the current traveling speed. In the shown example where current traveling speed is not changed, the indicator moves counter clockwise together with the scale.

It is to be understood that the present invention is not limited to the embodiments described above and illustrated in the drawings; rather, the skilled person will recognize that many changes and modifications may be made within the scope of the appended claims. For example, the highlighted area 7 is highlighted in a first way when the current traveling speed 4 is above the speed limit 3 and in a second way different from the first way when the current traveling speed 4 is below the speed limit 3.

In figures 2 and 3 the current traveling speed 4 is shown to be above the speed limit 3. In figures 4 and 5 the current traveling speed 4 is instead shown to be below the speed limit 3. The highlighted areas 7 checkered in two ways in the embodiments of the present disclosure shown in figures 2-5. When the current traveling speed 4 is above the speed limit 3 as shown in figures 1 and 2, the highlighted area 7 is checkered in one way. When the current traveling speed 4 instead is below the speed limit 3 as shown in figures 4 and 5, the highlighted area 7 is checkered in another way.

The highlighting of the area 7 could be made in various ways, for instance using various colors, e.g. green for when the current traveling speed 4 is below the speed limit 3 and red when the current traveling speed 4 is above the speed limit 3. A further possibility is to have the intensity of the light vary in the highlighted area. The larger the difference the more intense the light. Also, if the current traveling speed 4 exceeds the speed limit 3 with a lot, a signal or some kind of tactile warning could be emitted.

## Claims

1. A speedometer for a vehicle comprising a display (1) arranged to display a speed scale (2), wherein the display (1) is further arranged to display a speed limit (3) and the current travelling speed (4),
**characterized in**
**that** the speedometer is arranged to adapt the displayed speed scale (2) according to the speed limit (3) such that the speed limit (3) is arranged to be displayed in the same location on the display (1) irrespective of the speed limit.

2. The speedometer according to claim 1, wherein the speed limit (3) is arranged to be displayed in the middle of the displayed speed scale (2).

3. The speedometer according to any of the claims 1 and 2, wherein the speedometer is arranged to select a subset of an available total speed scale (2) around the speed limit (3) and display the selected speed scale subset.

4. The speedometer according to any of the preceding claims, wherein the speedometer comprises an indication means (5) for indicating the speed limit on the displayed speed scale (2).

5. The speedometer according to any of the preceding claims, wherein the speedometer comprises a pointer (6) moveably arranged relative the speed scale (2) for indicating the current travelling speed.

6. The speedometer according to any of the preceding claims, wherein the area (7) on the display (1) displaying the difference between the speed limit (3) and the current traveling speed (4) is highlighted.

7. The speedometer according to claim 6, wherein the highlighted area (7) is highlighted in a first way when the current traveling speed (4) is above the speed limit (3) and in a second way different from the first way when the current traveling speed (4) is below the speed limit (3).

8. The speedometer according to any of the preceding claims, wherein the speed scale (2) is enlarged adjacent the speed limit (3).

9. A vehicle comprising a speedometer according to any of the preceding claims.

10. A method for displaying in a vehicle the current traveling speed (4) and the speed limit (3) on a speedometer display (1) comprising:
- receiving information on the current traveling speed,
- receiving information on the speed limit,
- displaying a speed scale (2),
- moving the speed scale (2) to have the speed limit (3) in a fixed position on the speedometer display, and
- displaying the current traveling speed (4).

11. The method according to claim 10, further comprising the step of highlighting the area (7) between the current traveling speed (4) and the speed limit (3).

12. The method according to any of the claims 10 and 11, wherein the speed limit information is received from a navigation system.

13. The method according to any of the claims 10 and 11, wherein the speed limit information is received from a camera in the vehicle that is arranged to identify speed limit signs by a road.

14. The method according to any of the claims 10-13, further comprising the step of enlarging the speed scale (2) adjacent the speed limit (3).

15. The method according to any of the claims 10-14, further comprising the step of emitting a tactile signal to the driver if the current traveling speed (4) is above the speed limit (3).
